## Europäisches Patentamt
## European Patent Office
## Office européen des brevets

(19)

(11) Numéro de publication: **0 085 817**
**B1**

(12)

# FASCICULE DE BREVET EUROPEEN

(45) Date de publication du fascicule du brevet:
**04.06.86**

(21) Numéro de dépôt: **82400239.8**

(22) Date de dépôt: **10.02.82**

(51) Int. Cl.⁴: **A 01 F 15/14**, A 01 D 85/00

(54) **Dispositif de liage à deux bras pour presses à balles cylindriques.**

(43) Date de publication de la demande:
**17.08.83 Bulletin 83/33**

(45) Mention de la délivrance du brevet:
**04.06.86 Bulletin 86/23**

(84) Etats contractants désignés:
**DE FR GB IT NL**

(56) Documents cités:
**EP - A - 0 041 444**
**FR - A - 2 457 636**

(73) Titulaire: **JOHN DEERE (Société Anonyme), 8, Quai de la Madeleine, F-45000 Orléans (FR)**

(72) Inventeur: **Viaud, Jean, Chargey-les-Gray, F-70100 Gray (FR)**
Inventeur: **Diot, Joel André, Les Crayes, F-70100 Chargey-Les-Gray (FR)**

(74) Mandataire: **Pruvost, Marc Henri et al, Cabinet ORES 6, Avenue de Messine, F-75008 Paris (FR)**

## Description

La présente invention concerne les presses à balles cylindriques ou rondes.

Ces presses sont d'un type général bien connu et comprennent des jeux de bandes ou courroies qui, par leur déplacement, forment par enroulement à l'intérieur d'une chambre ménagée dans le corps de la presse une balle de forme générale cylindrique ou ronde à partir de produits de récolte, notamment de fourrage ou de foin, ramassés sur le champ au cours de la progression de la presse. Il est usuel, dans les machines de ce type, avant le déchargement de la balle cylindrique, d'assurer son liage à l'intérieur de la chambre de la presse.

Cette opération, qui est réalisée à l'aide d'un lien constitué généralement par une ficelle, est effectuée de façon connue au moyen d'un organe de guidage de la ficelle déplacé transversalement au sens de marche de la presse devant l'orifice d'entrée des produits de récolte à l'intérieur de la chambre de formation de la balle. La ficelle est alors prélevée à une réserve telle qu'une boîte à ficelle prévue sur le châssis ou corps de la presse. Du fait du déplacement transversal de l'organe de guidage, cette ficelle forme autour de la balle, lorsqu'elle est appelée par la rotation de cette dernière, des spires hélicoïdales assurant un liage sur toute la longueur de cette balle.

Afin de réduire le temps nécessaire au liage de la balle, qui représente un temps mort pendant lequel aucun ramassage des produits de récolte ne peut généralement avoir lieu sur une presse de type classique, on a déjà proposé (US-A 3 064 556 et 4 158 331 ainsi que EP-A 0 041 444) de prévoir sur la presse deux bras jumelés montés de façon pivotante et se déplaçant simultanément, en couvrant chacun sensiblement la moitié de la largeur de l'orifice d'entrée précité des produits de récolte. Ainsi, on peut réduire sensiblement de moitié le temps de liage, sans pour cela devoir renoncer à une distance entre les spires de ficelle suffisamment faible pour éviter toute dispersion des produits de récolte lorsque la balle est déchargée sur le sol.

Il existe toutefois, dans les dispositifs de liage à deux bras proposés jusqu'ici, un risque potentiel de liage incorrect de la balle si l'une des ficelles n'est pas saisie par elle au moment du déclenchement de l'opération de liage. Dans un tel cas, le liage est alors limité à une moitié de balle et il faut recommencer l'opération de liage ou bien les produits de récolte peuvent s'éparpiller lors du déchargement de la balle sur le sol.

Le but de l'invention est de créer un dispositif de liage à deux bras pour presser à balles cylindriques apportant une solution à ce problème.

Il est déjà connu d'utiliser, pour la commande d'un bras guide-ficelle de dispositif de liage, un vérin hydraulique qui est alimenté lors du déclenchement de l'opération de liage et qui provoque alors le débattement angulaire requis du bras.

L'invention tire également parti de ce moyen connu et elle a pour but de créer un agencement évitant l'actionnement du vérin de commande lorsque les deux brins de ficelle passant par les deux bras guide-ficelle ne sont pas saisis par la balle devant être liée.

L'invention concerne à cet effet un dispositif de liage pour presses à balles cylindriques du type comprenant deux bras guide-ficelle montés de façon pivotante sur le châssis de la presse de façon telle que leur extrémité libre effectue, lors de leur pivotement, un mouvement de balayage transversalement à la presse, sensiblement devant l'orifice d'entrée des produits de récolte, de façon à former autour de la balle, lors du liage des spires hélicoïdales à partir de la ficelle guidée par chaque bras, des moyens reliés à ces bras pour provoquer leur pivotement jumelé d'une position de départ vers une position de repos lorsque ces moyens sont actionnés, des moyens de rappel des bras de la position de repos à la position de départ au début de l'opération de liage, une source de fluide sous pression, et des organes de commande qui sont reliés à la source de fluide sous pression, sur lesquels les deux ficelles de liage passent entre la boîte à ficelle de la presse et les bras guide-ficelle et qui sont déplacés positivement par ces ficelles lorsqu'une traction est exercée sur elles sous l'effet de l'appel des ficelles par la balle en vue du liage, caractérisé en ce que les moyens reliés aux bras sont constitués par un vérin relié directemen aux bras guide-ficelle et alimenté à partir de la source de pression pour provoquer le déplacement de ce vérin dans un sens afin de faire pivoter les bras guide-ficelle vers la position de repos lors de l'opération de liage, en ce que des moyens sont prévus pour faire communiquer les deux chambres du vérin et permettre ainsi un déplacement de ce vérin dans l'autre sens au début de l'opération de liage et ainsi le mouvement de rappel des bras guide-ficelle sous l'effet de ces moyens de rappel, et en ce que les organes de commande sont reliés à cette source de pression de manière à assurer sa mise en mouvement et à créer lors de leur déplacement une pression d'alimentation du vérin pour l'opération de liage.

Du fait de la présence des deux organes jumelés précités entre la source de fluide sous pression et le ou les vérins de commande des bras, l'alimentation de ce vérin ou de ces vérins en fluide sous pression n'a lieu que si ces deux organes sont tous deux actionnés par les ficelles de liage, de sorte que l'opération de liage n'est déclenchée qui si les deux brins de ficelle sont saisis par la balle, ce qui évite ainsi tout liage incorrect de celle-ci. Suivant une particularité de l'invention, la source de fluide sous pression est constituée par une pompe axiale dont le cylindre et la tige de piston sont reliés respectivement aux organes de commande déplacés par les ficelles de liage.

Suivant une réalisation paraissant avantageuse, les organes de commande sont constitués par des poulies sur lesquelles les ficelles de liage s'enroulent en sens opposés entre la boîte à ficelle et les bras guide-ficelle, le cylindre et la tige de piston de la pompe axiale étant reliés à des points excentrés de ces poulies.

Le vérin hydraulique d'actionnement des bras guide-ficelle peut judicieusement être un vérin du type à simple effet, actionné hydrauliquement dans le sens commandant le mouvement de balayage des bras guide-ficelle, et il peut être prévu alors un ressort de rappel combiné fonctionnellement à ce vérin hydraulique pour rappeler les bras guide-ficelle en position de départ au début de l'opération de liage.

Suivant une autre particularité de l'invention, des clapets anti-retour sont prévus dans le circuit de fluide du vérin d'actionnement des bras, ces clapets étant montés dans un sens permettant l'écoulement du fluide pour commander le déplacement requis de ce vérin pour le déplacement des bras guide-ficelle en vue du liage lors de l'actionnement de la pompe, et en ce qu'une dérivation est prévue en combinaison avec ces clapets pour permettre l'écoulement en retour du fluide lorsque le liage est terminé et que les bras sont rappelés par les moyens de rappel en position de départ.

Un clapet taré peut alors être monté dans cette dérivation.

D'autres solutions encore apparaîtront aux techniciens spécialisés dans ce domaine.

Le dispositif de liage suivant l'invention est utilisable sur des presses comportant deux bras de liage pivotants disposés de diverses manières, ces bras pouvant être montés autour de points de pivotement voisins de l'axe longitudinal de la presse, ou au contraire prévus sur les côtés opposés de celle-ci, ou encore conjugués d'une autre manière, chaque fois qu'un déplacement conjoint des bras doit être assuré pour obtenir un liage correct de la balle.

L'invention concerne encore les presses à balles cylindrique ou rondes équipées d'un dispositif de liage du type décrit ci-avant.

La description qui va suivre, faite en regard des dessins annexés, donnés à titre non limitatif, permettra de mieux comprendre l'invention.

La Fig. 1 est une vue d'ensemble en perspective d'une presse à balles du type auquel l'invention est applicable.

La Fig. 2 est une représentation schématique en perspective d'un mode de réalisation de dispositif de liage à deux bras suivant l'invention.

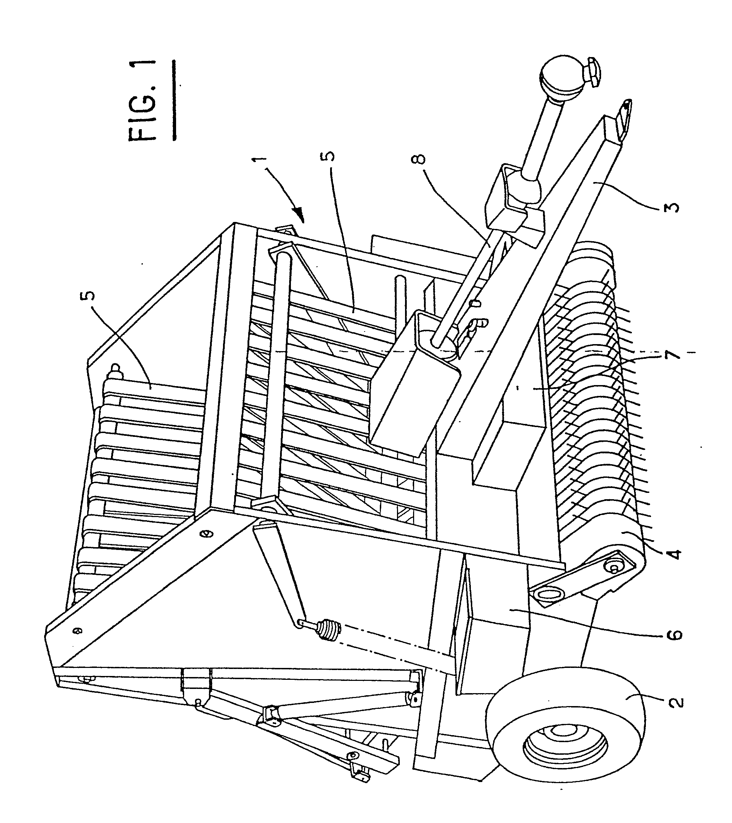

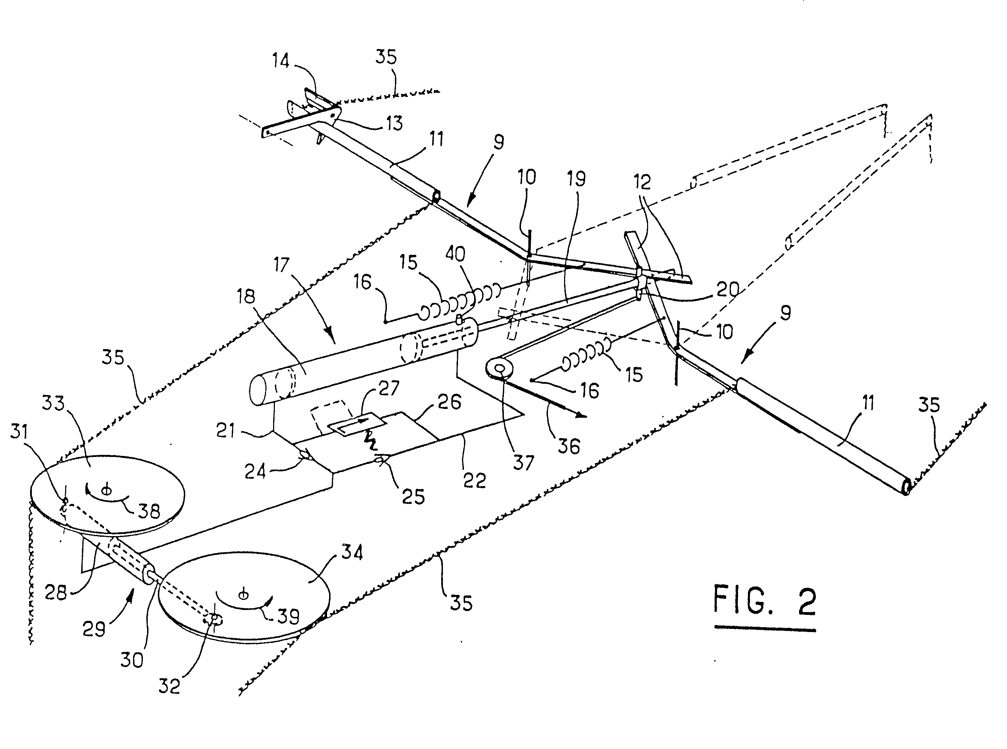

On a montré sur la Fig. 1 une presse à balles cylindriques ou rondes comportant un corps 1 supporté par un châssis équipé de roues 2, la presse étant destinée à être attelée à un tracteur au moyen d'un timon ou flèche d'attelage 3. Un ramasseur 4 est prévu de façon classique à la partie avant de la presse, de manière à ramasser les produits de récolte, tels que du fourrage, sur le champ et à les amener à un orifice d'entrée ménagé à la partie avant de la presse, en vue de leur transfert à la chambre de formation de la balle, dans laquelle une balle est formée par enroulement entre des bandes ou courroies 5 tournant dans le sens approprié, d'une manière en soi connue. On a indiqué en 6 sur la Fig. 1 la boîte à ficelle de liage et en 7 un carter dans lequel est monté le dispositif de commande de liage, qui est illustré par la Fig. 2. La référence 8 désigne un arbre d'entraînement destiné à être relié à l'arbre de prise de force du tracteur auquel la presse est attelée.

Le dispositif représenté sur la Fig. 2 comporte deux bras guide-ficelle 9 disposés symétriquement par rapport à l'axe longitudinal de la presse et montés chacun à pivotement autour d'un axe 10. Chaque bras guide-ficelle 9 est constitué par un levier à deux bras comportant un bras guide-ficelle proprement dit, constitué sur une partie de sa longueur par un tube 11, et un bras d'actionnement 12. Ces bras guide-ficelle 9 sont montés sur la presse de façon telle que, pendant l'opération de liage, les extrémités libres des tubes 11 décrivent une trajectoire en face de l'orifice d'entrée des produits de récolte dans la presse, d'une manière en soi connue. Les bras guide-ficelle 9 sont retenus en position de repos, dans laquelle ils sont orientés à l'opposé l'un de l'autre transversalement à la presse, par des crochets 13 conjugués de façon connue à des couteaux 14, un seul de ces crochets et de ces couteaux ayant été représenté sur le dessin pour plus de clarté. Les bras guide-ficelle 9 sont soumis à la sollicitation de ressorts 15 montés entre les bras 12 et un point fixe 16 du châssis, pour les amener rapidement de leur position de repos indiquée en traits pleins à une position de départ indiquée en pointillé au début de l'opération de liage, lorsque lesdits bras guide-ficelle 9 sont libérés par les crochets 13 sous l'effet d'une commande manuelle ou automatique, également d'une manière en soi connue.

Le dispositif suivant l'invention comprend un vérin 17 de commande des bras guide-ficelle, dont le cylindre 18 est fixé sur le châssis de la presse et dont la tige de piston 19 porte vers son extrémité une crosse 20 qui, comme montré sur le dessin, attaque les bras 12 pour provoquer le pivotement des bras guide-ficelle 9 de la position de départ indiquée en pointillé vers la position montrée en traits pleins lors de la sortie de la tige 19 du vérin 17, pour assurer l'opération de liage.

Le vérin 17 est du type à double effet. Par une longueur additionnelle appropriée, la partie avant du cylindre fait office de réservoir d'appoint. Un évent 40 prévu sur la partie avant du cylindre permet une libre variation du volume du fluide pendant le mouvement du piston. Les extrémités de son cylindre 18 sont reliées par des conduits 21, 22 à un conduit commun 23. Des clapets 24 et 25 sont montés respectivement dans les conduits 21 et 22 dans un sens permettant l'écoulement du fluide du conduit 23 vers le vérin 17 par le conduit 21, et l'écoulement en retour depuis l'autre extrémité du vérin 17 vers le conduit 23 par le conduit 22. Un conduit en dérivation 26 est prévu entre les conduits 21, 22, au delà des clapets 24, 25 par rapport au conduit 23. Un clapet de surpression taré 27 est prévu dans ce conduit en dérivation 26 pour permettre l'écoulement de fluide du conduit 21 vers le conduit 22 en court-circuitant les clapets 24, 25 pour une raison qui sera indiquée plus loin.

Le conduit 23 est relié au cylindre 28 d'une pompe axiale 29 dont la tige de piston est indiquée en 30. Le cylindre 28 et la tige 30 sont reliés à des points excentrés 31, 32 de deux poulies 33, 34 sur lesquelles les brins de ficelle 35 provenant de la boîte à ficelle 6 s'enroulent en sens opposés, ces brins de ficelle 35 rejoignant ensuite les tubes 11 des bras guide-ficelle et traversant ces tubes pour leur guidage au moment du liage, d'une manière en soi connue.

Un câble 36 est attaché par une extrémité à la crosse 20 de la tige de piston 19 du vérin 17 et il passe sur une poulie de renvoi 37. Il est fixé par son autre extrémité (non représentée) à la porte arrière de la presse, afin d'exercer une force sur la tige de piston 19 lors de l'ouverture de cette porte, comme décrit plus loin.

Le fonctionnement du dispositif suivant l'invention est le suivant:

Au début de l'opération, les bras guide-ficelle 9 occupent les positions indiquées en traits pleins. Quand la formation de la balle est terminée, les crochets 13 sont actionnés, soit par le conducteur du tracteur, soit de façon automatique par un détecteur approprié, d'une manière en soi connue, ce qui libère les bras guide-ficelle 9, lesquels sont alors amenés par pivotement, sous l'effet des ressorts 15, dans la position indiquée en pointillé, dans laquelle les extrémités libres des tubes 11 sont voisines du milieu de la presse.

Ce déplacement est possible étant donné qu'à ce moment la tige de piston 19 du vérin 17 se trouve en position rentrée, comme cela apparaîtra plus loin.

Dans la position indiquée en pointillé des bras guide-ficelle 9, les brins de ficelle 35 qui pendent vers le bas sont saisis par la balle tournant dans la chambre de la presse, d'une manière en soi connue. Une traction est alors exercée par ces brins de ficelle pour faire tourner les poulies 33, 34 en sens opposés, comme indiqué par les flèches 38, 39. Du fait de cette traction et de la position excentrée des points de liaison 31, 32 du cylindre 28 et de la tige de piston 30 avec ces poulies 33, 34, la pompe 29 est actionnée et elle tend à refouler, à chaque course de rentrée de la tige de piston 30, du fluide par le conduit 23. Ce fluide franchit le clapet 24 et parvient par le conduit 21 à l'extrémité arrière du cylindre 18 du vérin 17, ce qui repousse le piston de ce vérin dans le sens de la sortie de la tige 19. Le liquide qui se trouve à l'autre extrémité du cylindre 18 s'écoule en retour par le conduit 22 et le clapet 25, pour revenir à la pompe 29 par le conduit 23 au moment de la course de sortie de la tige de piston 30.

Ainsi, le système formé par la pompe 29 et le vérin 17, avec les conduits associés, est ici un système en circuit fermé, mais on pourrait également conjuguer à l'ensemble un réservoir, avec retour du fluide vers celui-ci à partir du conduit 22.

Cette sortie progressive de la tige 19 du vérin 17 à chaque course de la pompe 29 provoque un pivotement lent des bras guide-ficelle 9 à l'écart l'un de l'autre, du fait de l'attaque des bras 12 par la crosse 20, ces bras pivotant alors autour des axes 10.

Lorsque les bras parviennent au niveau des crochets 13 et des couteaux 14, la ficelle 35 est sectionnée et les bras sont retenus en position de repos. Ceci complète l'opération de liage.

A ce moment, d'une manière en soi classique, la porte arrière de la presse est ouverte, de sorte qu'une traction est exercée sur le câble 36 et ainsi sur la crosse 20, pour ramener la tige de piston 19 en arrière. Les poulies 33, 34 sont immobiles, étant donné qu'aucune traction ne s'exerce plus sur la ficelle 35. Le circuit de fluide comprenant le vérin 17 et la pompe 29 est donc au repos. La force exercée sur la tige 19 en direction de l'intérieur du cylindre 18 tend à refouler le fluide par le conduit 21. Etant donné que ce fluide ne peut pas franchir le clapet 24, il passe alors par la dérivation 26 et le clapet taré 27, pour parvenir au conduit 22 et rejoindre l'extrémité du cylindre 18 correspondant à la tige de piston. Il se produit donc une compensation de volume de fluide entre les deux extrémités du cylindre 18, ce qui permet la rentrée de la tige de piston jusqu'à sa position de fin de course, rendant possible le mouvement de pivotement des bras guide-ficelle 9 pour passer de la position de repos à la position de départ comme indiqué précédemment quand une nouvelle opération de liage est déclenchée.

On supposera maintenant que l'un des deux brins de ficelle 35 n'a pas été saisi par la balle dans la position de départ des bras guide-ficelle 9, indiquée en pointillé sur le dessin. Dans ce cas, une traction ne s'exerce que sur l'un des brins de ficelle 35, par exemple sur le brin passant autour de la poulie 34. Cette traction provoque la rotation de la poulie 34 dans le sens indiqué par la flèche 39. Il en résulte un effort exercé par le point excentré 32 sur la tige de piston 30 de la pompe 29. Mais étant donné qu'aucune traction ne s'exerce sur l'autre brin de ficelle 35 enroulé autour de la poulie 33, celle-ci peut tourner librement dans le même sens que la poulie 34. Il en résulte un déplacement d'ensemble du cylindre 28 et de la tige de piston 30 de la pompe axiale 29, sans aucun refoulement de fluide par le conduit 23. Ainsi, le vérin de commande 17 n'est pas actionné et les bras guide-ficelle 9 ne sont pas déplacés. Le conducteur du tracteur peut alors noter immédiatement ce défaut et il peut intervenir pour y remédier, ce qui évite le liage d'une balle sur la moitié seulement de sa longueur et les inconvénients qui en résulteraient lors du déchargement de cette balle du fait de l'éparpillement des produits de récolte.

Il est évident que le fonctionnement est le même si c'est l'autre brin de ficelle 35 qui n'est pas saisi par la balle.

On voit ainsi que le dispositif de liage suivant l'invention apporte une solution au problème que pose la réalisation d'un liage correct dans le cas d'un dispositif comportant deux bras guide-ficelle à mouvements jumelés.

**Revendications**

1. Dispositif de liage pour presses à balles cylindriques (1) du type comprenant deux bras guide-ficelle (9) montés de façon pivotante sur le châssis de la presse de façon telle que leur extrémité libre effectue, lors de leur pivotement, un mouvement de balayage transversalement à la presse, sensiblement devant l'orifice d'entrée des produits de récolte, de façon à former autour de la balle, lors du liage, des spires hélicoïdales à partir de la ficelle (35) guidée par chaque bras, des moyens reliés à ces bras (9) pour provoquer leur pivotement jumelé d'une position de départ vers une position de repos lorsque ces moyens sont actionnés, des moyens (15) de rappel des bras (9) de la position de repos à la position de départ au début de l'opération de liage, une source de fluide sous pression (29), et des organes de commande (33, 34) qui sont reliés à la source de fluide sous pression, sur lesquels les deux ficelles de liage (35) passent entre la boîte à ficelle (6) de la presse et les bras guide-ficelle (9) et qui sont déplacés positivement par ces ficelles lorsqu'une traction est exercée sur elles sous l'effet de l'appel des ficelles par la balle en vue du liage, caractérisé en ce que les moyens reliés aux bras sont constitués par un vérin (17) relié directement aux bras guide-ficelle (9) et alimenté à partir de la source de pression (29) pour provoquer le déplacement de ce vérin dans un sens afin de faire pivoter les bras guide-ficelle (9) vers la position de repos lors de l'opération de liage, en ce que des moyens (26, 27) sont prévus pour faire communiquer les deux chambres du vérin (17) et permettre ainsi un déplacement de ce vérin dans l'autre sens au début de l'opération de liage et ainsi le mouvement de rappel des bras guide-ficelle (9) sous l'effet de ces moyens de rappel (15), et en ce que les organes de commande (33, 34) sont reliés à cette source de pression (29) de manière à assurer sa mise en mouvement et à créer lors de leur déplacement une pression d'alimentation du vérin pour l'opération de liage.

2. Dispositif de liage suivant la revendication 1, caractérisé en ce que la source de fluide sous pression est constituée par une pompe axiale (29) dont le cylindre (28) et la tige de piston (30) sont reliés respectivement aux organes de commande (33, 34) déplacés par les ficelles de liage.

3. Dispositif de liage suivant la revendication 2, caractérisé en ce que les organes de commande (33, 34) sont constitués par des poulies sur lesquelles les ficelles de liage (35) s'enroulent en sens opposés entre la boîte à ficelle (6) et les bras guide-ficelle (9), le cylindre (28) et la tige de piston (30) de la pompe axiale (29) étant reliés à des points excentrés (31, 32) de ces poulies (33, 34).

4. Dispositif suivant l'une quelconque des revendications précédentes, caractérisé en ce que le vérin hydraulique (17) d'actionnement des bras guide-ficelle (9) est un vérin du type à simple effet, actionné hydrauliquement dans le sens commandant le mouvement de balayage des bras guide-ficelle, et en ce qu'il est prévu au moins un ressort de rappel (15) combiné fonctionnellement à ce vérin hydraulique (17) pour rappeler les bras guide-ficelle (9) en position de départ au début de l'opération de liage.

5. Dispositif de liage suivant l'une quelconque des revendications 2–4, caractérisé en ce que des clapets anti-retour (24, 25) sont prévus dans le circuit de fluide (21, 22) du vérin (17) d'actionnement des bras, ces clapets étant montés dans un sens permettant l'écoulement du fluide pour commander le déplacement requis de ce vérin pour le déplacement des bras guide-ficelle (9) en vue du liage lors de l'actionnement de la pompe (29), et en ce qu'une dérivation (26) est prévue en combinaison avec ces clapets (24, 25) pour permettre l'écoulement en retour du fluide lorsque le liage est terminé et que les bras sont rappelés par les moyens de rappel en position de départ.

6. Dispositif de liage suivant la revendication 5, caractérisé en ce qu'un clapet taré (27) est monté dans cette dérivation (26).

**Patentansprüche**

1. Vorrichtung zum Binden an Pressen für zylindrische Ballen (1) der Gattung, welche zwei Garnführungsarme (9), die schwenkbar auf dem Fahrgestell der Presse derart angeordnet sind, dass ihre freien Enden während des Schwenkens eine Streichbewegung quer zur Presse ausführen, und zwar unmittelbar vor der Eintrittsöffnung für die Ernteprodukte, um während des Bindevorganges um den Ballen schraubenförmige Wicklungen mit dem durch jeden Arm geführten Garn (35) zu bilden, mit den Armen (9) verbundene Mittel, um deren paarweises Verschwenken von einer Startstellung zu einer Ruhestellung zu bewirken, wenn diese Mittel betätigt werden, Mittel (15) zum Zurückholen der Arme (9) von der Ruhestellung in die Startstellung bei Beginn des Bindevorganges, eine Fluiddruck-Quelle (29) und Steuerorgane (33, 34) aufweist, die mit der Fluiddruckquelle verbunden sind, über die die beiden Bindegarne (35) zwischen dem Garnkasten (6) der Presse und den Garnführungsarmen (9) laufen und die durch die Garne positiv verstellt werden, wenn auf diese ein Zug unter der Wirkung des Garnabzuges durch den Ballen im Hinblick auf die Bindung ausgeübt wird, dadurch gekennzeichnet, dass die mit den Armen verbundenen Mittel durch einen Zylinder (17) gebildet werden, der direkt mit den Garnführungsarmen (9) verbunden ist und von der Druckquelle (29) gespeist wird, um eine Verstellung des Zylinders in einem Sinne zu bewirken, dass die Garnführungsarme (9) während des Bindevorganges in eine Ruhestellung geschwenkt werden, dass Mittel (26, 27) vorgesehen sind, um die beiden Kammern des Zylinders (17) in Verbindung zu bringen und so eine Verstellung des Zylinders im anderen Sinne bei Beginn des Bindevorganges und folglich die Rückholbewegung der Garnführungsarme (9) unter der Wirkung der Rückholmittel (15) zu ermöglichen, und dass die Steuerorgane (33, 34) mit jener Druckquelle (29) in der Weise verbunden sind, dass sie ihre Bewegung und während der Bewegung die Bildung eines Speisedruckes für den Zylinder für den Bindevorgang sicherstellen.

2. Vorrichtung zum Binden nach Anspruch 1, dadurch gekennzeichnet, dass die Fluiddruckquelle durch eine Axialpumpe (29) gebildet wird, deren Zylinder (28) und deren Kolbenstange (30) jeweils mit Steuerorganen (33, 34) verbunden sind, welche durch die Bindegarne verstellt werden.

3. Vorrichtung zum Binden nach Anspruch 3, dadurch gekennzeichnet, dass die Steuerorgane (33, 34) durch Scheiben gebildet werden, über die die Bindegarne (35) sich im entgegengesetzten Sinne abrollen zwischen dem Garnkasten (6) und den Garnführungsarmen (9), wobei der Zylinder (28) und die Kolbenstange (30) der Axialpumpe (29) mit den Scheiben (33, 34) an exzentrisch liegenden Punkten (31, 32) verbunden sind.

4. Vorrichtung nach irgendeinem der voranstehenden Ansprüche, dadurch gekennzeichnet, dass der hydraulische Betätigungszylinder (17) der Garnführungsarme (9) ein Zylinder von einfach wirkendem Typ ist, der hydraulisch in dem Sinne betätigt wird, indem er die Streichbewegung der Garnführungsarme bestimmt, und dass wenigstens eine Rückholfeder (15) vorgesehen ist, die funktionell mit dem hydraulischen Zylinder (17) verbunden ist, um die Garnführungsarme (9) bei Beginn des Bindevorganges in die Ausgangsstellung zurückzuholen.

5. Vorrichtung zum Binden nach irgendeinem der Ansprüche 2 bis 4, dadurch gekennzeichnet, dass Rückschlagventile (24, 25) in dem Fluidkreis (21, 22) des Betätigungszylinders (17) der Arme vorgesehen sind, die in einem solchen Sinne montiert sind, dass sie eine Fluidströmung zur Steuerung der erforderlichen Verstellung des Zylinders für die Verstellung der Garnführungsarme (9) im Hinblick auf den Bindevorgang während der Betätigung der Pumpe (29) gestatten und dass in Verbindung mit den Rückschlagventilen (24, 25) eine Zweigleitung (26) vorgesehen ist, um ein Rücklaufen des Fluids zu gestatten, wenn der Bindevorgang beendet ist, und dass die Arme durch die Rückholmittel in die Ausgangsstellung zurückgeholt sind.

6. Vorrichtung zum Binden nach Anspruch 5, dadurch gekennzeichnet, dass ein Ausgleichsventil (27) in der Abzweigung (26) angeordnet ist.

## Claims

1. A binding apparatus for cylindrical bale presses (1) of the type comprising two twine guide arms (9) mounted pivotally on the frame of the press in such a way that their free ends effect, when pivoted, a sweeping movement transversally with respect to the press and generally in front of the opening for the intake of crop materials, in such a way as to form around the bale, at the time of binding, helical turns of the twine (35) which is guided by each arm; means linked to these arms (9) for causing their synchronous pivoting from a starting position to a rest position when this means is actuated; means (15) for returning the arms (9) from the rest position to the starting position at the beginning of the binding operation; a pressurized fluid source; and drive members (33, 34) which are linked to the pressurized fluid source and around which the two lengths of binding twine (35) pass, between the press twine box (6) and the twine guide arms (9), the drive members (33, 34) being displaced positively by these lengths of twine when a pulling force is applied to the lengths of twine as a result of their being drawn by the bale waiting to be bound, characterized in that the means linked to the arms consists of a jack (17) connected directly to the twine guide arms (9) and supplied from the pressure source (29) to cause the displacement of the jack in one direction in order to make the twine guide arms (9) pivot towards the rest position during the binding operation; in that means (26, 27) are provided to allow communication between the two chambers of the jack (17) and thus to enable a displacement of this jack in the other direction at the beginning of the binding operation and in this way the return of the twine guide arms (9) under the effect of the return means (15); and in that the drive members (33, 34) are linked to the pressure source (29) in such a way as to ensure that it is actuated and to create, when they are displaced, a feed pressure for the jack for the binding operation.

2. A binding apparatus according to claim 1, characterized in that the pressurized fluid source consists of an axial pump (29) whose cylinder (28) and piston-rod (30) are connected to respective ones of the drive members (33, 34) moved by the binding twine.

3. A binding apparatus according to claim 2, characterized in that the drive members (33, 34) consist of pulleys around which the lengths of twine (35) run in opposite directions, between the twine box (6) and the twine guide arms (9), the cylinder (28) and the piston-rod (30) of the axial pump (29) being connected to eccentric points (31, 32) on these pulleys (33, 34).

4. An apparatus according to any one of the preceding claims, characterized in that the hydraulic jack (17) which actuates the twine guide arms (9) is a single-acting jack, actuated hydraulically in the direction which drives the sweeping movement of the twine guide arms, and in that there is provided at least one return spring (15) combined functionally with the hydraulic jack (17) to return the twine guide arms (9) to the starting position at the beginning of the binding operation.

5. A binding apparatus according to any one of claims 2-4, characterized in that non-return valves (24, 25) are provided in the fluid circuit (21, 22) of the arm actuating jack (17), these valves being arranged in a direction allowing the fluid flow to bring about the required movement of this jack for the displacement of the twine guide arms (9) for the purpose of binding when the pump (29) is actuated, and in that a by-pass (26) is provided in combination with these valves (24, 25) to allow the fluid to flow back when the binding is completed and the arms are returned by the return means to the starting position.

6. A binding apparatus according to claim 5, characterized in that a calibrated valve is fitted in this by-pass (26).

FIG. 1

FIG. 2